# EUROPÄISCHE PATENTSCHRIFT

(11) **EP 2 256 388 B1**
(45) Veröffentlichungstag und Bekanntmachung des Hinweises auf die Patenterteilung: **07.01.2015**
(21) Anmeldenummer: 10005256.2
(22) Anmeldetag: 19.05.2010
(51) Int. Cl.: F16K 31/00, F02M 63/00, H02N 2/04

(54) **Antriebseinrichtung mit einem Piezostapelaktor**
Drive device with a piezo stack actuator
Dispositif d'entraînement doté d'un piézo-actionneur de pile

(30) Priorität: 20.05.2009 DE 202009007298 U
(43) Veröffentlichungstag der Anmeldung: 01.12.2010
(73) Patentinhaber: Bürkert Werke GmbH, 74653 Ingelfingen (DE)
(72) Erfinder: Fuchs, Maik, 01277 Dresden (DE); Tautenhahn, Ralf, 01307 Dresden (DE)
(74) Vertreter: Prinz & Partner mbB

(56) Entgegenhaltungen:
- EP-A2- 0 810 398
- WO-A1-01/14731
- WO-A1-02/20975
- WO-A2-01/24288
- DE-A1- 10 104 617
- DE-A1- 19 952 057

## Beschreibung

Die Erfindung betrifft eine Antriebseinrichtung mit einem Piezostapelaktor gemäß dem Oberbegriff des Anspruchs 1, insbesondere für Ventile.

Bislang sind Piezoantriebe für Ventile, hauptsächlich als Mikroventile, auf Siliziumbasis oder Einspritzventile mit Piezostapelaktoren für Kraftfahrzeuge bekannt. Im Bereich universell einsetzbarer Kleinventile werden üblicherweise Piezobiege- oder Piezomembranaktoren verwendet. Dabei wird auf eine Wegvergrößerung verzichtet. Der Einsatz von Stapelaktoren mit Wegübersetzung auf Basis von Festkörpergelenken oder hydraulischen Übersetzungen ist nur für spezielle Einsatzzwecke bekannt.

Die bekannten Lösungen weisen aufwendige Mechanismen zur Kompensation der thermischen Ausdehnung (z.B. Schachtelbauweise, exotische Materialien) auf. Des Weiteren stellen sie hohe Anforderungen an Fertigungsverfahren und - genauigkeit. Der Montage- und Justageaufwand wird dabei als sehr hoch eingeschätzt.

Piezobiegeelemente können nur geringe Stellkräfte erzeugen und eignen sich daher bei Ventilen nur für sehr kleine Drücke.

In der EP 0 810 398 A2 ist ein Ventil gezeigt, bei dem ein Piezostapelaktor auf einen zweiarmigen Hebel einwirkt, um einen Schieber in eine Dichtposition zu beaufschlagen. Der Schieber kann gegen die Kraft einer Stellfeder quer zur Beaufschlagungsrichtung in verschiedene Schaltstellungen verschoben werden.

Die WO 01/14731 A1 zeigt ein Ventil mit einem Piezostapelaktor, bei dem eine Bewegung des Piezostapelaktors durch ein Überträgerelement ohne Verstärkung der Hubbewegung auf einen zweiarmigen Hebel übertragen wird, der wiederum ein Ventilglied wirkt, um dieses in eine geöffnete Stellung zu bringen.

Aufgabe der Erfindung ist das Erzeugen eines vergrößerten Stellwegs aus dem Hub eines Piezostapelaktors, um damit definiert einen Fluidstrom zu kontrollieren.

Gelöst wird diese Aufgabe durch die Merkmale der Anspruchs 1. Weitere Ausgestaltungen sind in den Unteransprüchen angegeben.

Bei der bevorzugten Ausführungsform ist erfindungsgemäß eine zweistufige Kraft-Hub-Übersetzung mittels Hebel und kraftschlüssigen Koppelstellen vorgesehen. Zur Realisierung der Ventilfunktion ist eine 3/2-Wege Wippenmechanik vorgesehen. Die Kompensation der Temperaturausdehnung erfolgt ebenfalls zweistufig durch entsprechende Ausgleichselemente.

Bei elektromagnetischen Systemen wird der Offnungshub über das Kräftegleichgewicht zwischen Magnet, Rückstellfeder und den wirkenden Fluidkräften eingestellt. Die direkte Vorgabe eines Wegs durch den Piezoaktor ermöglicht eine höhere Positioniergenauigkeit unabhängig vom Systemzustand. Der form- und lagetolerante Aufbau durch Einsatz toleranzausgleichender Bauteile reduziert die Fertigungsanforderungen erheblich und vereinfacht die Montage und Justage. Die zweistufige Temperaturkompensation ermöglicht einen präziseren Ausgleich der thermischen Ausdehnungen im System.

Der eingesetzte Piezostapelaktor erzeugt eine Wegvorgabe und wirkt damit nur indirekt zur Dosierung der durch Federn aufgebrachten Stellkräfte. Diese Federn dienen daher gleichzeitig zum Sicherstellen des Kontakts zwischen den Baugruppen, zum Toleranzausgleich und zur Bereitstellung der Stellkräfte. Bei Anwendung der Antriebseinrichtung auf ein Wippenventil ist die zweite Stufe der Übersetzung gleichzeitig das Betätigungselement des Wippenventils. Die vorgesehene Membran ermöglicht die Sitzdichtung, so wie eine Medientrennung. Durch eine erste Stufe der Temperaturkompensation wird die thermische Ausdehnung durch Eigenerwärmung des Piezoaktors ausgeglichen, während die Ausdehnung des Ventilgehäuses aufgrund erhöhter Umgebungstemperaturen durch ein zweites Ausgleichselement kompensiert wird.

Die beigefügten Figuren zeigen schematisch die erfindungsgemäße Antriebseinrichtung und ihre Anwendung bei einem Wippenventil.
Fig. 1 zeigt die Antriebseinrichtung im Ruhezustand;
Fig. 2 zeigt die Antriebseinrichtung im Arbeitszustand; und
Fig. 3 zeigt ein Wippenventil, das durch die Antriebseinrichtung betätigt werden kann.

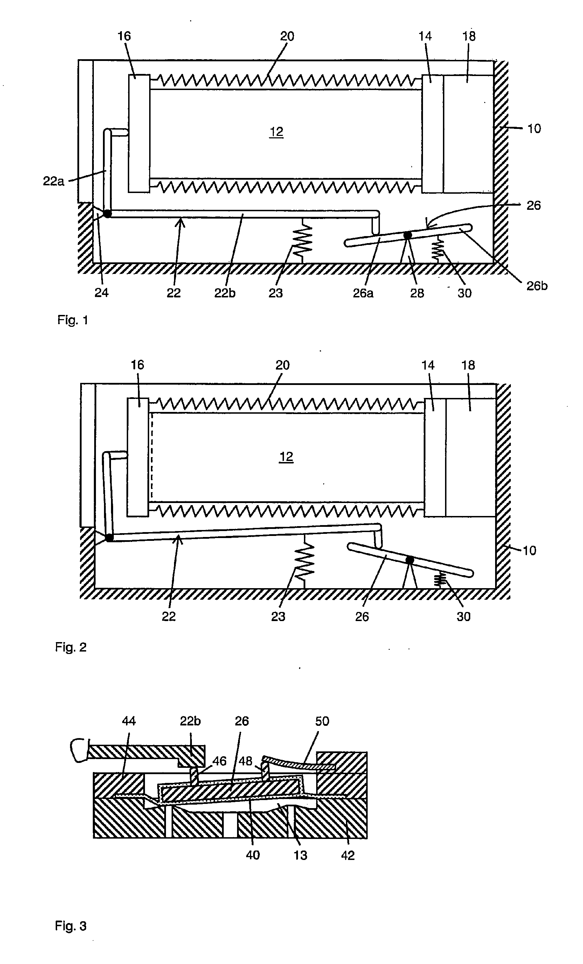

In einem nur schematisch dargestellten Gehäuse 10 ist ein Piezostapelaktor 12 zwischen zwei Endstücken 14, 16 angeordnet und auf der Seite des Endstücks 14 über ein Temperaturausgleichselement 18 an einer Wand des Gehäuses 10 abgestützt. Die Endstücke 14, 16 sind durch Zugfedern 20 gegeneinander und gegen die Enden des Piezoaktorstapels 12 verspannt. Ein zweiarmiger Winkelhebel 22 ist bei 24 am Gehäuse 10 schwenkbar gelagert und mit dem freien Ende seines ersten Hebelarms 22a an dem Endstück 16 in Anlage. Durch eine auf den zweiten Hebelarm 22b wirkende Zugfeder 23 wird der Winkelhebel 22 so beaufschlagt, dass einerseits der Hebelarm 22a kraftschlüssig mit dem Endstück 16 gekoppelt bleibt und andererseits das freie Ende des Hebelarms 22b kraftschlüssig mit einem Betätiger 26 gekoppelt wird, der in den Figuren als zweiarmiger, am Gehäuse bei 28 schwenkbar gelagerter Hebel dargestellt ist. Das freie Ende des Hebelarms 22b drückt gegen den ersten Hebelarm 26a des Betätigers 26, und eine Zugfeder 30 greift am zweiten Hebelarm 26b des Betätigers 26 an. Da die Zugfeder 23 stärker dimensioniert ist als die Zugfeder 30, wird der Betätiger entgegen der Wirkung der Zugfeder 30 in eine Ruhestellung verschwenkt, wie in Fig. 1 gezeigt.

Bei angesteuertem Piezostapelaktor 12 wird das Endstück 16 um den kleinen Stellhub verlagert und verschwenkt den zweiarmigen Hebel 22 wie in Fig. 2 gezeigt. Der Betätiger 26 wird freigegeben und durch die Zugfeder 30 in eine Betätigungsstellung verschwenkt, wie in Fig. 2 gezeigt.

Man erkennt in Fig. 2, dass durch eine zweistufige Hebelübersetzung der Stellweg des Betätigers 26 gegenüber dem Stellhub des Piezostapelaktors 12 vergrößert ist. Der Abtrieb des Gesamtsystems liegt vorzugsweise am Ende des Hebelarms 26b.

### Temperaturkompensation

Der Abstand zwischen der Abtriebseite des Piezostapelaktors 12 und dem Lagerpunkt 24 des Hebels 22 muss konstant gehalten werden, um eine Stellbewegung durch die thermische Ausdehnung zu vermeiden.

Innere Erwärmung: Endstücke 14, 16 mit Vorspannung durch Zugfedern 20 gleichen negativen Temperaturkoeffizienten des Piezostapelaktors 12 aus.

Umgebungstemperatur: Ausgleichselement 18 gleicht thermische Ausdehnung des Gehäuses 10 aus.

### Membranventil

Das in Fig. 3 im Schnitt gezeigte Membranventil hat einen Wippenmechanismus zur Betätigung. Eine Membran 40 ist zwischen Gehäuseteilen 42, 44 eingespannt. Der Betätiger 26 ist in die Membran 40 einvulkanisiert. Er bildet mit dieser zwei Schließkörper in Gegenüberlage zu zwei am Gehäuseteil 42 gebildeten Dichtsitzen des 3/2-Wegeventils. Das freie Ende des Hebelarms 22b drückt gegen einen ersten Zapfen 46 am Betätiger 26 und hält in der gezeigten Ruhestellung den benachbarten Schließkörper dichtend in Anlage an dem entsprechenden Dichtsitz. Der Betätiger 26 hat im Bereich des anderen Endes einen zweiten Zapfen 48, gegen den ein blattfederartiges Federelement 50 drückt, welches der Zugfeder 30 der Fig. 1 und 2 entspricht. In der Betätigungsstellung gibt der Hebelarm 22b den Betätiger frei, und das Federelement 50 drückt den benachbarten Dichtkörper am Betätiger 26 gegen den entsprechenden Dichtsitz, der verschlossen wird, während der andere Dichtsitz geöffnet wird.

## Patentansprüche

1. Antriebseinrichtung mit einem Piezostapelaktor (12) und einer Hub-Übersetzung, die den Dehnungshub des Piezostapelaktors (12) in einen vergrößerten Stellhub eines Betätigers (26) umsetzt, wobei der Betätiger (26) durch ein Federelement (30) in eine Betätigungsstellung beaufschlagt und kraftschlüssig mit einem Übertragungselement gekoppelt ist, das seinerseits durch ein weiteres Federelement (23) in eine Ruhestellung beaufschlagt und zugleich kraftschlüssig mit dem Abtriebsende des Piezostapelaktors (12) gekoppelt wird,
wobei das Übertragungselement in der Ruhestellung den Betätiger (26) in eine Ruhestellung zwingt
und das Übertragungselement in einer durch den Piezostapelaktor (12) bewirkten Betätigungsstellung den Betätiger (26) freigibt, so dass der Betätiger (26) unter der Wirkung des ihn beaufschlagenden Federelements (30) die Betätigungsstellung einnimmt,
wobei das Übertragungselement durch einen zweiarmigen, schwenkbar gelagerten Hebel (22) gebildet ist, dessen erster Hebelarm (22a) an dem Abtriebsende des Piezostapelaktors (12) und dessen zweiter Hebelarm (22b) an dem Betätiger (26) kraftschlüssig angreift,
**dadurch gekennzeichnet, dass**
das Übertragungselement in der Ruhestellung den Betätiger (26) entgegen dem diesen beaufschlagenden Federelement (30) in eine Ruhestellung zwingt und
der Betätiger (26) durch einen zweiarmigen, schwenkbar gelagerten Hebel gebildet ist, dessen erster Hebelarm (26a) an dem zweiten Hebelarm (22b) des Übertragungselements kraftschlüssig angreift und dessen zweiter Hebelarm (26b) zwischen der Ruhestellung und der Betätigungsstellung des Betätigers (26) einen Stellhub ausführt.

2. Antriebseinrichtung nach einem der vorstehenden Ansprüche, bei der die Enden des Piezostapelaktors (12) zwischen zwei durch Federelemente (20) gegeneinander verspannten Endstücken (14, 16) angeordnet sind.

3. Antriebseinrichtung nach einem der vorstehenden Ansprüche, bei der in Reihe mit dem Piezostapelaktor (12) ein thermisches Ausgleichselement (18) angeordnet ist.

4. Membranventil mit einer Antriebseinrichtung gemäss einem der Ansprüche 1 bis 3 und mit einer zwischen zwei Gehäuseteilen eingespannten Membran, die einen Betätiger (26) der Antriebseinrichtung ummantelt, der mit seiner Ummantelung wenigstens einen Schließkörper für einen benachbart an einem der Gehäuseteile angeordneten Dichtsitz bildet.

5. Membranventil nach Anspruch 4, das als 3/2-Wegeventil mit zwei Dichtsitzen ausgebildet ist, wobei der Betätiger (26) an jedem seiner zwei Enden einen Schließkörper in Gegenüberlage zu einem der Dichtsitze bildet.

6. Membranventil nach Anspruch 5, bei dem das Übertragungselement in seiner Ruhestellung den Betätiger (26) an einem ersten seiner Schließkörper gegen den benachbarten ersten Dichtsitz diesen verschließend drückt.

7. Membranventil nach Anspruch 6, bei dem das Übertragungselement in seiner Betätigungsstellung den Betätiger (26) freigibt, der an einem zweiten seiner Schließkörper durch das zugeordnete Federelement gegen den benachbarten zweiten Dichtsitz diesen verschließend gedrückt wird.

## Claims

1. A drive device comprising a piezo stack actuator (12) and a stroke transmission which converts the expansion stroke of the piezo stack actuator (12) into an enlarged actuating stroke of an actuator (26), the actuator (26) being urged to an actuating position by a spring member (30) and being coupled in a force-transmitting manner to a transmission element which, for its part, is urged to a rest position by a further spring member (23) and, at the same time, is coupled to the output end of the piezo stack actuator (12) in a force-transmitting manner,
the transmission element, when in the rest position, forcing the actuator (26) to a rest position,
and the transmission element, when in an actuating position effected by the piezo stack actuator (12), releasing the actuator (26), so that the actuator (26) assumes the actuating position under the effect of the spring member (30) acting on it,
the transmission element being formed by a two-armed, swivel-mounted lever (22), the first lever arm (22a) of which engages the output end of the piezo stack actuator (12) in a force-transmitting manner and the second lever arm (22b) of which engages the actuator (26) in a force-transmitting manner,
**characterized in that**
the transmission element, when in the rest position, forces the actuator (26) to a rest position contrary to the spring member (30) acting on the actuator, and
the actuator (26) is formed by a two-armed, swivel-mounted lever, the first lever arm (26a) of which engages the second lever arm (22b) of the transmission element in a force-transmitting manner and the second lever arm (26b) of which executes an actuating stroke between the rest position and the actuating position of the actuator (26).

2. The drive device according to any of the preceding claims, in which the ends of the piezo stack actuator (12) are arranged between two end pieces (14, 16) which are braced against each other by spring members (20).

3. The drive device according to any of the preceding claims, in which a thermal compensating element (18) is arranged in series with the piezo stack actuator (12).

4. A diaphragm valve comprising a drive device according to any of claims 1 to 3 and comprising a diaphragm which is clamped between two housing parts and envelops an actuator (26) of the drive device, the actuator (26) with its envelope forming at least one closure body for a sealing seat arranged in a neighboring relationship on one of the housing parts.

5. The diaphragm valve according to claim 4, which is in the form of a 3/2-way valve with two sealing seats, the actuator (26) forming, on each of its two ends, a closure body positioned opposite one of the sealing seats.

6. The diaphragm valve according to claim 5, in which the transmission element, when in its rest position, presses the actuator (26) at a first one of the closure bodies thereof against the neighboring first sealing seat so as to close the first sealing seat.

7. The diaphragm valve according to claim 6, in which the transmission element, when in its actuating position, releases the actuator (26) which at a second one of the closure bodies thereof is pressed against the neighboring second sealing seat by the associated spring member so as to close the second sealing seat.

## Revendications

1. Moyen d'entraînement, comportant un actionneur piézoélectrique en pile (12) et une transmission de course qui convertit la course d'allongement de l'actionneur piézoélectrique en pile (12) en une course de réglage augmentée d'un moyen d'actionnement (26), le moyen d'actionnement (26) étant sollicité dans une position d'actionnement par un élément ressort (30) et étant couplé par coopération de forces à un élément de transmission qui est pour sa part sollicité dans une position de repos par un autre élément ressort (23) et qui est en même temps couplé par coopération de forces à l'extrémité de sortie de l'actionneur piézoélectrique en pile (12),
l'élément de transmission, dans la position de repos, forçant le moyen d'actionnement (26) dans une position de repos,
et l'élément de transmission libérant le moyen d'actionnement (26) dans une position d'actionnement provoquée par l'actionneur piézoélectrique en pile (12), de sorte que le moyen d'actionnement (26) prend la position d'actionnement sous l'effet de l'élément ressort (30) qui le sollicite,
l'élément de transmission étant réalisé par un levier (22) à deux bras monté à pivotement, dont le premier bras de levier (22a) s'engage sur l'extrémité de sortie de l'actionneur piézoélectrique en pile (12) et le deuxième bras de levier (22b) sur le moyen d'actionnement (26) par coopération de forces,
**caractérisé en ce que**
l'élément de transmission, dans la position de repos, force le moyen d'actionnement (26) dans une position de repos à l'encontre de l'élément ressort (30) qui le sollicite, et
le moyen d'actionnement (26) est réalisé par un levier à deux bras monté à pivotement, dont le premier bras de levier (26a) s'engage sur le deuxième bras de levier (22b) de l'élément de transmission par coopération de forces et dont le deuxième bras de levier (26b) effectue une course de réglage entre la position de repos et la position d'actionnement du moyen d'actionnement (26).

2. Moyen d'entraînement selon l'une des revendications précédentes, dans lequel les extrémités de l'actionneur piézoélectrique en pile (12) sont agencées entre deux pièces d'extrémité (14,16) serrées l'une contre l'autre par des éléments ressort (20).

3. Moyen d'entraînement selon l'une des revendications précédentes, dans lequel un élément de compensation thermique (18) est agencé en série avec l'actionneur piézoélectrique en pile (12).

4. Soupape à diaphragme, comportant un moyen d'entraînement selon l'une des revendications 1 à 3, et comportant un diaphragme qui est serré entre deux parties de boîtier et enveloppe un moyen d'actionnement (26) du moyen d'entraînement qui forme avec son enveloppe au moins un corps de fermeture pour un siège d'étanchéité agencé de manière adjacente à l'une des parties de boîtier.

5. Soupape à diaphragme selon la revendication 4, laquelle est réalisée sous forme de soupape à 3/2 voies avec deux sièges d'étanchéité, le moyen d'actionnement (26) formant à chacune de ses deux extrémités un corps de fermeture dans une position opposée à l'un des sièges d'étanchéité.

6. Soupape à diaphragme selon la revendication 5, dans laquelle l'élément de transmission, dans sa position de repos, presse le moyen d'actionnement (26) à un premier de ses corps de fermeture contre le premier siège d'étanchéité adjacent de manière à fermer ce dernier.

7. Soupape à diaphragme selon la revendication 6, dans laquelle l'élément de transmission, dans sa position d'actionnement, libère le moyen d'actionnement (26) qui, au niveau d'un deuxième de ses corps de fermeture, est pressé par l'élément ressort associé contre le deuxième siège d'étanchéité adjacent de manière à fermer ce dernier.
